# EUROPÄISCHE PATENTSCHRIFT

(11) **EP 1 021 660 B1**
(45) Veröffentlichungstag und Bekanntmachung des Hinweises auf die Patenterteilung: **16.06.2004**
(21) Anmeldenummer: 99950482.2
(22) Anmeldetag: 03.08.1999
(51) Int. Cl.: F16C 32/06, F16C 33/16

(54) **LUFTLAGER, INSBESONDERE FÜR DIE WELLE EINER MOTORSPINDEL**
AIR BEARING, ESPECIALLY FOR THE SHAFT OF A MOTOR SPINDLE
PALIER D'AIR DESTINE NOTAMMENT A L'ARBRE D'UNE BROCHE A MOTEUR

(30) Priorität: 05.08.1998 DE 19835339
(43) Veröffentlichungstag der Anmeldung: 26.07.2000
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas H., Dipl.-Ing.
(86) Internationale Anmeldenummer: PCT/DE1999/002360
(87) Internationale Veröffentlichungsnummer: WO 2000/008345

(56) Entgegenhaltungen:
- EP-A- 0 471 329
- EP-A- 0 606 970
- CH-A- 683 844
- US-A- 4 982 126
- US-A- 5 017 022
- US-A- 5 692 840
- PATENT ABSTRACTS OF JAPAN vol. 1996, no. 8, 30. August 1996 (1996-08-30) & JP 08 105443 A (NIPPON CARBON), 23. April 1996 (1996-04-23)
- PATENT ABSTRACTS OF JAPAN vol. 18, no. 583 (M-1699), 8. November 1994 (1994-11-08) & JP 06 213236 A (CANON), 2. August 1994 (1994-08-02)

## Beschreibung

Die Erfindung betrifft ein Luftlager für einen mit hoher Umfangsgeschwindigkeit drehbaren Rotor, insbesondere für die Welle einer Motorspindel zum Antrieb eines Bearbeitungswerkzeugs, wobei zwischen einer Lagerfläche des Rotors und einer Gegenlagerfläche eines feststehenden Lagerelements ein Luftspalt vorgesehen ist und das Lagerelement in der Gegenlagerfläche in gleichem Abstand voneinander mehrere Lagertaschen aufweist, die über kalibrierte Bohrungen im Lagerelement mit einer Druckluftquelle verbunden sind.

Luftlager der angegebenen Art sind aus der DE 21 24 918 A1 bekannt. Sie werden vor allem zur Lagerung von mit sehr hoher Drehzahl und entsprechend hoher Umfangsgeschwindigkeit rotierenden Wellen eingesetzt, um den Reibungswiderstand des Lagers und die daraus resultierende Lagererwärmung beherrschen zu können. Bei derartigen Luftlagern wird der Rotor von Luftpolstern getragen, die mit Hilfe der mit Druck zugeführten Luft in dem Luftspalt zwischen Lagerfläche und Gegenlagerfläche erzeugt werden und die eine Berührung von Lagerfläche und Gegenlagerfläche verhindern. Die berührungsfreie Lagerung des Rotors ist nicht nur während dessen Drehung sondern auch bei Stillstand des Rotors gegeben. Im Betrieb, d.h. bei schneller Drehung des Rotors sind Luftlager sehr empfindlich gegen Überlastung. Kommt es bei schnellaufendem Rotor durch Überschreiten der durch die Tragfähigkeit der Luftpolster bestimmten maximalen Lagerbelastung zu einem Kontakt zwischen der Lagerfläche und der Gegenlagerfläche, so verursacht die hierbei auftretende Reibung infolge der hohen Relativgeschwindigkeit zwischen der Lagerfläche und der Gegenlagerfläche augenblicklich eine so starke Erwärmung und Verformung der metallischen Lagerwerkstoffe, daß das Lager blockiert und völlig zerstört wird. Diese Empfindlichkeit gegen Überlastung bereitet vor allem bei der Verwendung von Luftlagern zur Lagerung der Welle von hochtourigen Motorspindeln, die zum Antrieb von spanenden Bearbeitungswerkzeugen eingesetzt werden, erhebliche Probleme, da es bei der Steuerung der Motorspindelbewegung vorkommen kann, daß durch einen Fehler die zulässige Lagerbelastung überschritten und dadurch das Motorspindellager zerstört wird.

Nach W. J. Bartz et al., Luftlagerungen, Expert Verlag, 1982, ISBN 3-8169-0992-2, Seiten 22 und 99 kommen für den Bau luftgeschmierter Gleitlager als Werkstoffe Metalle, keramische Stoffe und Kunststoffe in Betracht. Die Verwendung rostfreier Stähle zur Begegnung der Korrosionsgefahr wird als möglich bezeichnet, allerdings hätten diese in der Regel schlechte Gleiteigenschaften. Als ein keramischer Werkstoff, der gute Notlaufeigenschaften besitze und gut zerspanbar sei, ist metallgetränkte Sinterkohle angegeben, ein poröser, gesinterter Graphit, der mit Metallen wie Weißmetall, Bleibronze, Antimon oder Silber imprägniert ist. Zur Verbesserung der Notlaufeigenschaften einer luftgelagerten, handgehaltenen Turbine sind außerdem Versuche mit kupfergetränkter Kunstkohle auf der Lagerseite und Stahl auf der Wellenseite genannt. Hierbei habe sich jedoch gezeigt, daß das Lagermaterial zum Schmieren neige, was zu einer Verstopfung der Luftlagerdüsen geführt habe. Antimon- und silberhaltige Kunstkohle zeigten als Lagerwerkstoff bessere Eigenschaften, bei diesen wirkte sich aber der erhöhte Verschleiß bei Vorhandensein von Öl nachteilig aus. Versuche mit Ferrotitanid als Buchsenwerkstoff unter Beibehaltung von Stahl für die Welle hätten dagegen deutlich bessere Ergebnisse bezüglich des Verschleißverhaltens gebracht.

Weiterhin ist eine für hohe Geschwindigkeiten bestimmte, gering belastete aerostatisch gelagerte Rolle bekannt, die aus einer aus mit Harz getränktem Kohlegraphit hergestellten Hülse besteht. Die Hülse ist auf einer aus porösem Kohlegraphit hergestellten Innenhülse gelagert, die von einer Kanäle für die Druckgaszufuhr aufweisenden Nabe getragen wird. Das durch die poröse Innenhülse geleitete Druckgas erzeugt einen Gasfilm, der die drehbare Außenhülse trägt und gegenüber der Innenhülse zentriert. Bei Versagen des Gasfilms infolge Überlastung oder Unterbrechung der Gaszufuhr gleitet die Hülse auf der Innenhülse, wobei gute Notlaufeigenschaften beobachtet wurden.

Der Erfindung liegt die Aufgabe zugrunde, ein für hohe Umfangsgeschwindigkeit geeignetes Luftlager der angegebenen Art zu schaffen, das sich durch gute Tragfähigkeit und lange Lebensdauer auszeichnet und das durch eine Kurzzeitüberlastung in seiner Funktion nicht beeinträchtigt wird. Weiterhin soll das Luftlager kostengünstig herstellbar sein.

Die Aufgabe wird erfindungsgemäß dadurch gelöst, daß der Rotor aus einer korrosionsbeständigen Stahllegierung mit gehärteten Lagerflächen und das Lagerelement mit der Gegenlagerfläche aus einem dicht gepreßten, luftundurchlässigen Graphit besteht.

Die erfindungsgemäße Werkstoffpaarung eignet sich in besonderem Maße für außenbeaufschlagte Luftlager von mit sehr hoher Umfangsgeschwindigkeit umlaufenden Wellen, wie sie bei Motorsoindeln zur spanenden Bearbeitung von Werkstücken vorgesehen sind. Die hierbei auftretenden Notlaufbedingungen sind vor allem durch eine sehr hohe Energiedichte geprägt, da die Welle in der Anlauf- und Auslaufphase aerostatisch gelagert ist und ein Versagen des Luftfilms durch Überlasten des Lagers in der Regel bei voller Wellengeschwindigkeit auftritt. Hierbei hat sich gezeigt, daß durch die erfindungsgemäße Werkstoffpaarung trotz der hohen Umfangsgeschwindigkeit die bei einem Kontakt zwischen Welle und Lagerelement freiwerdende Reibungsenergie soweit begrenzt und beherrscht werden kann, daß es nicht zu einer die Lagerfunktion beeinträchtigenden Veränderung der Lager- und Gegenlagerfläche kommt. Selbst bei Umfangsgeschwindigkeiten der Lagerfläche von 10.000 ms⁻¹ bleibt bei einer Berührung die metallische Lagerfläche des Rotors im wesentlichen unverändert und wird lediglich durch Graphitstaub etwas geschwärzt. An der Gegenlagerfläche aus Graphit kann es zu geringem Materialabtrag und auch zur Bildung kleiner Riefen kommen, durch die die Funktion des Lagers jedoch nicht beeinträchtigt wird. Auch bei einer Vielzahl von Berührungen und einem entsprechend größeren Materialabtrag an der Gegenlagerfläche bleibt die Tragfunktion des Lagers bestehen, so lange der Luftspalt des Lagers im Verhältnis zur zugeführten Luftmenge nicht zu groß wird. Handelt es sich um ein Axiallager, so kann eine erhebliche Zunahme des Lagerspiels hingenommen werden, da sich auf der Tragseite immer der geeignete Luftspalt einstellt. Ein weiterer wesentlicher Vorteil der erfindungsgemäßen Lagergestaltung ist darin zu sehen, daß auch bei einer Beschädigung des Lagers durch zu häufige oder zu lang andauernde Überlastung das Lager mit geringem Aufwand wieder erneuert werden kann. Da es nicht zu einem Festfressen des Lagers kommt, läßt sich das beschädigte Lager ohne weiteres zerlegen. In der Regel erweist sich danach die Lagerfläche des Rotors als nicht oder allenfalls so gering beschädigt, daß sie durch Läppen nachgearbeitet werden kann. Die Gegenlagerfläche an dem aus Graphit bestehenden Lagerelement wird durch Erneuerung des entsprechenden Bauteils wieder in betriebsfähigen Zustand versetzt. Weiterhin hat sich als vorteilhaft erwiesen, daß die Lagertaschen und die sehr engen Drosselbohrungen unmittelbar in dem Lagerelement ausgebildet werden können, so daß das Einsetzen separater Düsenelemente nicht erforderlich ist.

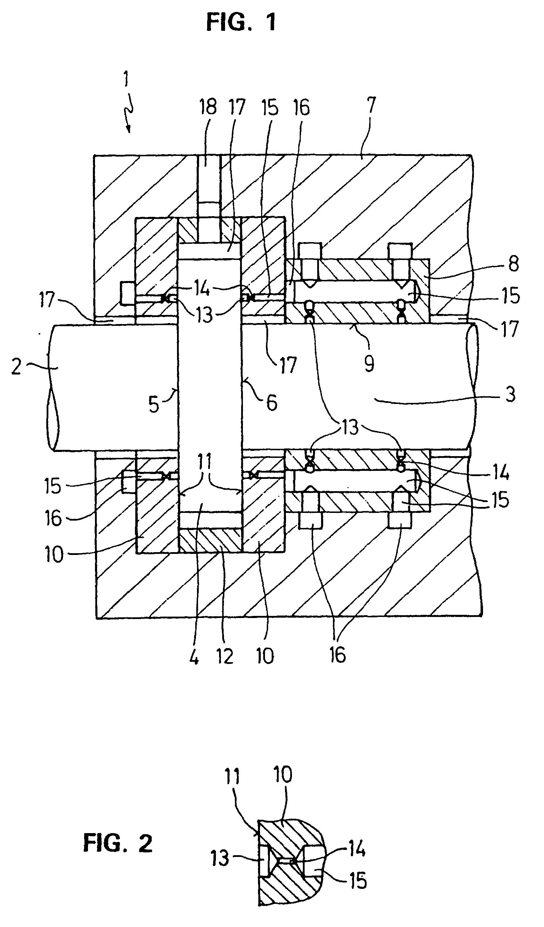

Die Erfindung wird nachfolgend anhand eines Ausführungsbeispiels näher erläutert, das in der Zeichnung dargestellt ist. Es zeigen
- Figur 1: einen Querschnitt durch ein Luftlager für die Welle einer Motorspindel und
- Figur 2: einen vergrößerten Ausschnitt eines Lagerelements mit einer Lagertasche.

Die Zeichnung zeigt ein Luftlager 1 zur radialen und axialen Lagerung der Welle 2 einer schnellaufenden frequenzgesteuerten Motorspindel zum Antrieb eines spanenden Werkzeugs. Die Welle 2 weist eine zylindrische Lagerfläche 3 und einen Ringbund 4 mit zwei parallelen, einander abgekehrten, kreisringförmigen Lagerflächen 5, 6 auf. In einem die Welle 2 umgebenden Gehäuse 7 sind zur Radiallagerung ein hülsenförmiges Lagerelement 8 mit einer hohlzylindrischen Gegenlagerfläche 9 und zur Axiallagerung beiderseits des Ringbunds 4 ringscheibenförmige Lagerelemente 10 mit einander zugekehrten, in Radialebenen liegenden Gegenlagerflächen 11 vorgesehen. Zwischen den Lagerelementen 10 befindet sich ein Distanzring 12, dessen axiale Breite um den erforderlichen Lagerspalt größer ist als die axiale Breite des Ringbunds 4. In der Gegenlagerfläche 9 des Lagerelements 8 befinden sich Lagertaschen 13, die entlang zweier im Abstand voneinander angeordneter Umfangslinien in gleichem Umfangsabstand voneinander angeordnet sind. Ebenso sind in den Gegenlagerflächen 11 der Lagerelemente 10 auf einem Kreisbogen in gleichem Abstand voneinander Lagertaschen 13 vorgesehen. Die Lagertaschen 13 stehen über Drosselbohrungen 14 mit Versorgungsbohrungen 15 in Verbindung, denen über Ringnuten 16 im Gehäuse 7 Druckluft zugeführt wird. Weiterhin sind an die Gegenlagerflächen 9, 11 angrenzend Ringkammern 17 vorgesehen, die entweder unmittelbar oder über Entlastungsbohrungen 18 mit der Atmosphäre in Verbindung stehen.

Bei dem beschriebenen Luftlager besteht die Welle 2 einschließlich des angeformten Ringbunds 4 aus nicht rostendem Stahl. Die Lagerflächen 3, 5, 6 sind gehärtet und mit höchster Formgenauigkeit und feinstgeläppter Oberfläche hergestellt. Die Lagerelemente 8, 10 bestehen aus gepreßtem, luftdichtem Elektrographit mit einem Anteil von > 3% anorganischem Phosphat, z.B. Elektrographit FE 65 oder FE 45Y2 der Schunk GmbH in 35452 Heuchelheim, Deutschland. Die Gegenlagerflächen 9, 11 weisen die gleiche Formgenauigkeit und Oberflächengüte wie die Lagerflächen 3, 5, 6 auf. Die Lagerspalte zwischen den Lagerflächen und den Gegenlagerflächen liegt im Bereich von 0,01 bis 0,02 mm.

Im Betrieb werden zwischen den Lagerflächen 3, 5, 6 und den Gegenlagerflächen 9, 11 im Bereich der Lagertaschen durch die mit Druck zugeführte Luft Luftpolster erzeugt, die die Lagerflächen 3, 5, 6 der Welle 2 zwischen den Gegenlagerflächen 9, 11 der Lagerelemente 8, 10 zentrieren und eine Berührung zwischen den Lagerflächen und Gegenlagerflächen verhindern. Die kontinuierlich zugeführte Luft entweicht über die Lagerspalte in die Ringkammern 17, wodurch auch bei hohen Umfangsgeschwindigkeiten von 10.000 ms⁻¹ und mehr die erforderliche Kühlung erreicht wird. Kommt es durch zu hohe radiale oder axiale Belastung des Luftlagers zu einer kurzzeitigen Überschreitung der Tragfähigkeit der Luftpolster und damit zu einer Berührung zwischen einer mit hoher Umfangsgeschwindigkeit rotierenden Lagerfläche und einer Gegenlagerfläche, so wird durch die auftretende Reibung etwas Graphitmaterial von der Gegenlagerfläche abgetragen, wobei die Lagerfläche und die Gegenlagerfläche der hierbei möglichen Erwärmung widerstehen. Ein Materialabtrag findet nur an der Gegenlagerfläche aus Graphit statt und ist so feinkörnig, daß er durch die Lagerluft aus dem Lagerspalt herausgefördert wird und ein Festklemmen des Lagers nicht eintritt. Selbst nach zahlreichen Wiederholungen derartiger Überlastungen des Lagers bleiben die Veränderungen von Lagerfläche und Gegenlagerfläche so gering, daß die Funktionsfähigkeit des Lagers nicht beeinträchtigt wird. Lediglich der Lagerspalt wird größer. Eine Überholung des Lagers ist erst erforderlich, wenn die Vergrößerung des Lagerspalts so weit zugenommen hat, daß die Bewegungsfreiheit der Welle zu groß wird. Der Aufwand einer Lagerüberholung ist jedoch vergleichsweise gering. Die abgenutzten Lagerelemente können durch neue ersetzt werden und die Lagerflächen der Welle müssen in der Regel nur nachgeläppt werden. Eine vollständige Erneuerung der Welle, wie es bei herkömmlichen Luftlagern bereits nach einmaliger Überlastung die Regel ist, entfällt.

## Patentansprüche

1. Luftlager für einen mit hoher Umfangsgeschwindigkeit drehbaren Rotor (2), insbesondere für die Welle (2) einer Motorspindel zum Antrieb eines Bearbeitungswerkzeugs, wobei zwischen einer Lagerfläche (3, 5, 6) des Rotors (2) und einer Gegenlagerfläche (9, 11) eines feststehenden Lagerelements (8, 10) ein Luftspalt vorgesehen ist und das Lagerelement (8, 10) in der Gegenlagerfläche (9, 11) in gleichem Abstand voneinander mehrere Lagertaschen (13) aufweist, die über kalibrierte Bohrungen (14) im Lagerelement (8, 10) mit einer Druckluftquelle verbunden sind, **dadurch gekennzeichnet, daß** der Rotor (2) aus einer korrosionsbeständigen Stahllegierung mit gehärteten Lagerflächen (3, 5, 6) und das Lagerelement (8, 10) mit der Gegenlagerfläche (9, 11) aus einem dicht gepreßten, luftundurchlässigen Graphit besteht.

2. Luftlager nach Anspruch 1, **dadurch gekennzeichnet, daß** das Lagerelement (8, 10) aus einem anorganisches Phosphat enthaltenden Elektrographit hergestellt ist.

## Claims

1. An air bearing for a rotor (2) adapted to rotate at high peripheral speed, in particular for the shaft (2) of a motor spindle for driving a machining tool, with provision being made for an air gap between a bearing surface (3, 5, 6) of the rotor (2) and a mating bearing surface (9, 11) of a stationary bearing element (8, 10), said bearing element (8, 10) having in the mating bearing surface (9, 11) several equidistant bearing pockets (13) communicating via calibrated bores (14) in the bearing element (8, 10) with a source of compressed air, **characterized in that** said rotor (2) is made of a corrosion-resistant steel alloy having hardened bearing surfaces (3, 5, 6) while the bearing element (8, 10) with the mating bearing surface (9, 11) is made of a densely compacted, air-impervious graphite material.

2. The air bearing as claimed in claim 1, **characterized in that** said bearing element (8, 10) is fabricated from an electrographite material containing inorganic phosphate.

## Revendications

1. Palier pneumatique pour un rotor (2) pouvant tourner avec une vitesse circonférentielle élevée, notamment pour l'arbre (2) d'une broche de moteur permettant d'entraîner un outil d'usinage, un espace d'air étant prévu entre une surface de palier (3, 5, 6) du rotor (2) et une contre-surface de palier (9, 11) d'un élément de palier fixe (8, 10) et l'élément de palier (8, 10) présentant dans la contre-surface de palier (9, 11) plusieurs poches de palier placées à égale distance les unes des autres et qui sont reliées à une source d'air comprimé au moyen d'alésages calibrés (14) pratiqués dans l'élément de palier (8, 10), **caractérisé en ce que** le rotor (1) se compose d'un alliage d'acier résistant à la corrosion avec des surfaces de palier (3, 5, 6) durcies et l'élément de palier (8, 10) avec la contre-surface de palier (9, 11) se compose d'un graphite compacté de façon dense imperméable à l'air.

2. Palier pneumatique selon la revendication 1, **caractérisé en ce que** l'élément de palier (8, 10) est fabriqué à base d'un électrographite contenant du phosphate minéral.
